# EUROPEAN PATENT APPLICATION

(11) **EP 2 199 154 A1**
(43) Date of publication of application: **23.06.2010**
(21) Application number: 09380172.8
(22) Date of filing: 27.10.2009
(51) Int. Cl.: B60Q 11/00

(54) **Emergency low-beam headlamp**

(30) Priority: 16.12.2008 ES 200803618
(71) Applicant: Fernández Llamas, Jose María, 47010 Valladolid (ES); Fernández Llamas, Agustin, 47010 Valladolid (ES)
(72) Inventor: Fernández Llamas, Jose María, 47010 Valladolid (ES); Fernández Llamas, Agustin, 47010 Valladolid (ES)

(57) **Abstract**

It consists of a replacement light which is activated when the current to melt, will incorporated into the optics front, under a separate exception, is driven by a device that will be incorporated into the dashboard or dashboard, emitting a constant light in order to warn of unexpected anomaly caused by our

## Description

The present invention relates to a passing lamp emergency power, alternative to the conventional, by which will achieve significant improvements both in terms of visibility, as well as safety, will operate a device by which activated at that moment (the light passing emergency power), which replaces the conventional dipped beam to malfunction for any unannounced or deterioration.

### BACKGROUND OF THE INVENTION

They are known for all cases in which improperly use the roads with our vehicle due to a lack of poor or sometimes no crossing lights, sometimes unwittingly and sometimes by carelessness of the driver gravely to endanger our security as well that of other road users. To avoid such drawbacks, the holders of the present invention, Mr. **Jose Maria Fernandez Llamas**, with DNI 71123849-Y and Mr. **Agustín Fernández Llamas**, with DNI 71123849-M have made a new and revolutionary model whose key features lighthouses are as follows. The presence of a light built into the front lights of the vehicle in order to reduce risks of accidents so we can facilitate greater visibility in adverse situations

Advantages: Greater security for the user greater visibility for all drivers, reduced traffic accidents, increased visibility in adverse conditions, in short, less risk. Disadvantages: None.

### DESCRIPTION OF THE INVENTION

The low beam power emergency light is a replacement which is activated when the current to melt, will incorporated into the optics front, under a separate exception, is actuated by a device that will be incorporated into the dashboard or dashboard, emitting a constant light in order to warn of unexpected occasions of our visibility, the light is automatically activated emergency power crossing so as to facilitate our best view in the unexpected.

### BRIEF DESCRIPTION OF THE DRAWINGS

To better understand the story is written in the present specification, accompanying drawings in which, solely by way of example, a practical case of embodiment of the emergency power light.

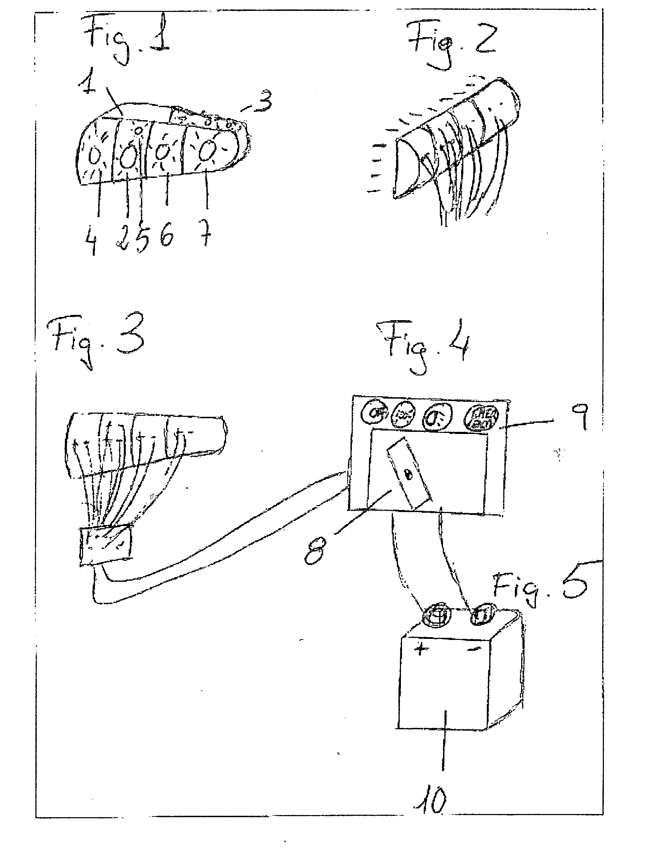

In the drawings Figure 1 is a front elevation view of the front optic in which location will position the emergency power light, Figure 2 is a side elevation view, Figure 3 is an elevation view of face opposed to Figure 1, Figure 4 is a front elevation view of the scorecard where they activate the light, 5 is a front elevation view of the vehicle battery.

### DESCRIPTION OF A PREFERRED EMBODIMENT

The light passing emergency power consists of a piece(1) which is incorporated within a perspective which will lead in a specific section for that invention, light position tell(2), daylight if your if applicable(3),direction indicator(4),short-range light (intersection)(5),long-range light (7),to be placed in specific section

The ignition device of the light, activated by a device (8) (switch) where malfunction necessary depending on the use of light in each moment, to be installed on the dashboard (9) or vehicle dashboard, this in turn is connected to the battery (10) of the vehicle.

## Claims

1. Light passing emergency power will be built into the front lights of the vehicle, possess a plastic housing which reside within the optics of the vehicle, is composed of a beam of light also known as short-range or low beam.

2. Light passing emergency power according to claim 1 **characterized** because the light is prepared and guided by a device that is operated manually when detecting unannounced.

3. Emergency low beam according to previous claims are manually operated by a device located on the dashboard instrument panel or dashboard lights, which in turn is connected to the battery's own vehicle which will have optimum performance.
